# EUROPÄISCHE PATENTSCHRIFT

(11) **EP 1 577 043 B1**
(45) Veröffentlichungstag und Bekanntmachung des Hinweises auf die Patenterteilung: **23.01.2008**
(21) Anmeldenummer: 04006217.6
(22) Anmeldetag: 16.03.2004
(51) Int. Cl.: B23F 23/12, B23F 23/06, G01B 7/28

(54) **Vorrichtung, CNC-Messgerät und Verfahren zum Vermessen eines rotationssymmetrischen Präzisionsteiles**
Device, CNC-gauge and method for measuring a rotationally symmetrical precision workpiece
Dispositif, juage à CNC et procédé de mesure de pièces de précision à symétrie de rotation

(43) Veröffentlichungstag der Anmeldung: 21.09.2005
(73) Patentinhaber: Klingelnberg GmbH, 42499 Hückeswagen (DE)
(72) Erfinder: Mies, Georg, 51688 Wipperfürth (DE); Wüster, Harald, 42477 Radevormwald (DE)
(74) Vertreter: OK pat AG

(56) Entgegenhaltungen:
- DE-A- 4 413 229
- US-A- 4 532 715
- MIKOLEIZIG G: "RECHNERGESTEUERTE MESSUNGEN AN VERZAHNUNGEN UND VERZAHNWERKZEUGEN. \CNC-GESTEUERTE VERZAHNUNGSMESSZENTREN" WERKSTATTSTECHNIK, SPRINGER VERLAG. BERLIN, DE, Bd. 80, Nr. 4, 1. April 1990 (1990-04-01), Seiten 207-211, XP000148482 ISSN: 0340-4544

## Beschreibung

Die Erfindung betrifft Vorrichtungen, CNC-Messgeräte und Verfahren zum Vermessen von rotationssymmetrischen Präzisionsteilen, vorzugsweise ein CNC-gesteuertes Verzahnungsmesszentrum zum Prüfen von Stirnradverzahnungen sowie Schneid- und Schabrädern, Schnecken und Schneckenrädern, Wälzfräsern, Kegelrädern. Siehe, zum Beispiel, US 4,532,715.

### HINTERGRUND DER ERFINDUNG

Es gibt zahlreiche Bearbeitungsverfahren, zum Herstellen von rotationssymmetrischen Präzisionsteilen, wie zum Beispiel Zahnrädern. Typischerweise wird während oder nach der Bearbeitung das Präzisionsteil vermessen.

Um die Genauigkeit der Bearbeitung eines Präzisionsteils nach der Bearbeitung prüfen zu können, kann das Präzisionsteil zum Beispiel aus der Bearbeitungsmaschine entnommen und in ein spezielles Messsystem eingespannt werden, wo es mittels Sensoren abgetastet und vermessen wird. Vorzugsweise kommen zu diesem Zweck numerisch gesteuerte Messgeräte zum Einsatz. Typischerweise wird zum Vermessen ein rotationssymmetrisches Präzisionsteil zwischen einer unteren Zentrierspitze und einer oberen Zentrierspitze eingespannt. Die untere Zentrierspitze sitzt auf einem Tisch, der durch einen Antrieb präzise in verschiedene Winkelpositionen gefahren werden kann. Das Präzisionsteil wird auf Grund seines Eigengewichts und des Anpressdrucks, der von der oberen Zentrierspitze ausgeht gegen die untere Zentrierspitze gedrückt. Dadurch wird eine Rotationsbewegung der unteren Zentrierspitze eins zu eins auf das Präzisionsteil übertragen. Die obere Zentrierspitze läuft lediglich mit, sie wird also nicht angetrieben.

Insbesondere geht es in der vorliegenden Patentanmeldung um CNC-gesteuerte Verzahnungsmesszentrum, die zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung geeignet sind.

Untersuchungen haben ergeben, dass bei Präzisionsteilen mit kleiner Masse und kleinem Durchmesser ein solcher Aufbau mit einer unteren Zentrierspitze und einer oberen Zentrierspitze ausreichend ist, um das Präzisionsteil solidarisch mit der unteren Zentrierspitze zu drehen. Ein solcher Aufbau ist vor allem ausreichend, wenn mit kleinen Winkelbeschleunigungen gearbeitet wird.

Vermehrt werden spezielle Messsysteme eingesetzt, um Präzisionsteile mit grossem Durchmesser und grösserem Gewicht zu vermessen. Ausserdem ist eine wichtige Anforderung an derartige Messungen, dass sie einerseits sehr genau, andererseits aber auch möglichst schnell durch geführt werden.

Solchen Anforderungen werden die herkömmlichen Messsysteme nicht gerecht. Eine schnelle Messung eines kompletten Präzisionsteiles macht es notwendig, dass mehrere Winkelpositionen innerhalb kürzester Zeit angefahren werden und das bei jeder Winkelposition ein Messsensor das Präzisionsteil abtastet. Die Messsysteme sind so ausgelegt, dass aber auch während der Drehbewegung gemessen werden kann. Beim Drehen des Präzisionsteiles treten hohe Winkelbeschleunigungen auf, die nachweislich zu einem Schlupf zwischen der unteren Zentrierspitze und dem Präzisionsteil führen. Dadurch stimmt die Winkelposition der unteren Zentrierspitze, respektive des Antriebs, und des Präzisionsteils nicht mehr miteinander überein.

Um das Problem des Schlupfes in den Griff zu bekommen, werden grössere und schwerere Präzisionsteile mittels eines sogenannten Mitnehmers eingespannt, der vorzugsweise einen Formschluss ermöglicht. Unter "Formschluss" versteht man, dass die Kraftübertragung zwischen dem Mitnehmer und dem Präzisionsteil durch ihre Form erfolgt. Dadurch kann der Schlupf weitestgehend beseitigt werden. Es ist jedoch ein Nachteil dieser Lösung, dass die Montage aufwendig und zeitraubend ist und das derartige formschlüssige Mitnehmer teurer und oft auch schwerer sind. Ausserdem ist die Handhabung der formschlüssigen Mitnehmer aufwendig und es gibt Präzisionsteile, an die man keinen solchen Mitnehmer ansetzen kann, da sie zum Beispiel keinen entsprechenden Bund an der Welle haben. Es ist ein weiterer Nachteil, dass es trotz der Verwendung von formschlüssigen Mitnehmern zu Situationen kommen kann, wo ein Schlupf auftritt. Dies kann zum Beispiel der Fall sein, wenn der Mitnehmer falsch oder zu locker montiert wurde.

Es ist eine Aufgabe der Erfindung eine Vorrichtung und ein entsprechendes Verfahren bereit zu stellen, das es ermöglicht auch grössere oder schwerere Präzisionsteile schnell und zuverlässig zu vermessen.

Mit der vorliegenden Erfindung soll insbesondere die Aufgabe gelöst werden, ein numerisch gesteuertes Messgerät (CNC Messgerät) so zu verbessern, dass es für eine schnelle Komplettmessung eines Präzisionsteiles, zum Beispiel eines Zahnrades, geeignet ist und das Messgerät einen einfachen und betriebssicheren Aufbau hat.

Die Aufgabe wird durch eine Vorrichtung gemäss Anspruch 1, ein CNC Messgerät gemäss Anspruch 10, bzw. durch ein Verfahren gemäss Anspruch 15 gelöst.

Vorteilhafte Ausgestaltungen des erfindungsgemässen Vorrichtung bilden die Gegenstände der Ansprüche 2 bis 9. Vorteilhafte Ausgestaltungen des erfindungsgemässen CNC Messgeräts bilden die Gegenstände der Ansprüche 10 bis 14 und vorteilhafte Ausgestaltungen des erfindungsgemässen Verfahrens bilden die Ansprüche 16 bis 18.

### ZEICHNUNGEN

Ausführungsbeispiele der Erfindung werden im Folgenden unter Bezugnahme auf die Zeichnungen näher beschrieben. Es zeigen:
- **FIG. 1**: ein erstes Messsystem, gemäss Erfindung;
- **FIG. 2**: eine perspektivische Detailansicht eines zweiten Messsystems, gemäss Erfindung;
- **FIG. 3A**: einen schematischen Stirnschnitt der Details eines synchron mit einem Zentriermittel mitlaufenden Winkelmesssystems gemäss Erfindung zeigt,
- **FIG. 3B**: eine perspektivische Detailansicht des synchron mit dem Zentriermittel mitlaufenden Winkelmesssystems gemäss Fig. 3A,
- **FIG. 4**: eine perspektivische Detailansicht eines weiteren Winkelmesssystems gemäss Erfindung;
- **FIG. 5**: ein schematisches Blockdiagram einer weiteren Ausführungsform der Erfindung;
- **FIG. 6A**: ein schematisches Diagram zur Erläuterung der relativen Winkelmessung, gemäss Erfindung;
- **FIG. 6B**: ein weiteres schematisches Diagram zur Erläuterung der relativen Winkelmessung, gemäss Erfindung.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

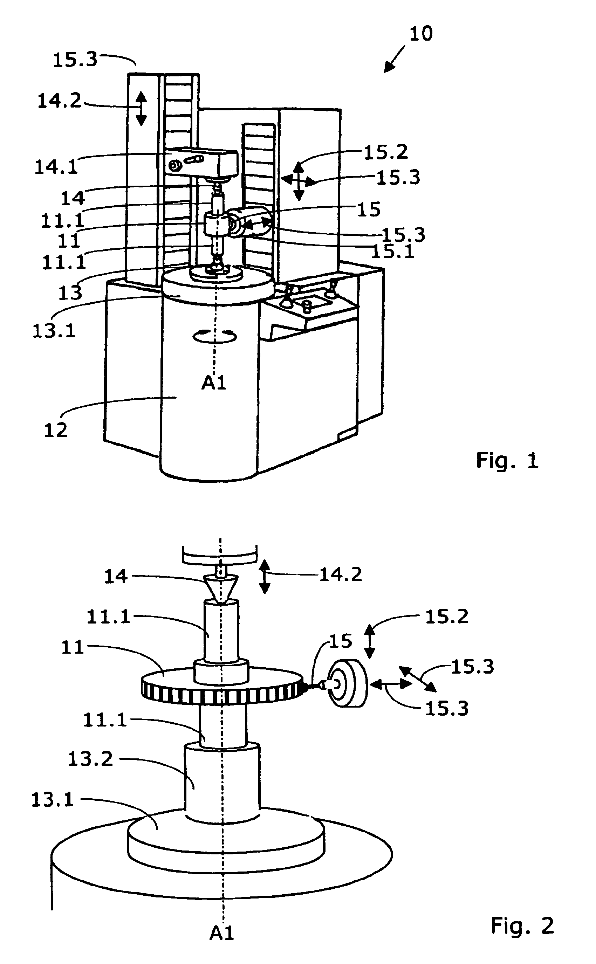

In einer vorteilhaften Ausführungsform der Erfindung, die in Fig. 1 gezeigt ist, geht es um ein vollautomatisches, CNC-gesteuertes Verzahnungsmesszentrum 10. Das Messzentrum 10 ist geeignet zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung, um nur einige Einsatzmöglichkeiten aufzuzählen.

Das Messsystem 10 umfasst einen über eine Ansteuerung 12 antreibbaren Mitnehmer 13 und ein mitlaufendes Zentriermittel 14, wobei der Mitnehmer 13 und das mitlaufende Zentriermittel 14 so angeordnet sind, dass ein zu vermessendes rotationssymmetrisches Präzisionsteil 11 koaxial zwischen Mitnehmer 13 und Zentriermittel 14 einspannbar ist, wie in Fig. 1 anhand eines Zylinderrades 11 gezeigt. Das Zylinderrad weist eine Welle 11.1 auf, die sich im gezeigten Beispiel nach oben und unten erstreckt. Die Ansteuerung 12 umfasst einen Antrieb und die Steuerung des Antriebs. Beides ist in Fig. 1 nicht sichtbar, da sich diese Elemente hinter einer Verkleidung des Messsystems 10 befinden.

Vorzugsweise wird der Mitnehmer 13 formschlüssig mit einem Tisch 13.1 verbunden, der durch die Ansteuerung 12 um eine erste Rotationsachse A1 drehbar ist. Der Mitnehmer 13 weist dabei eine Rotationsachse auf, die koaxial zur ersten Rotationsachse A1 verläuft. Vorzugsweise ist ein Arm 14.1 vorgesehen, der in der Höhe verschoben werden kann, wie durch den Doppelpfeil 14.2 angedeutet. Innerhalb des Armes 14.1 ist das mitlaufende Zentriermittel 14 so gelagert, dass es leicht um eine vertikale Achse rotieren kann, die sich mit der Rotationsachse A1 deckt und dass es beim Einspannen des Präzisionsteiles 11 gegen eine Rückstellkraft nach oben verschoben werden kann. Sowohl bei der Lagerung des mitlaufenden Zentriermittels 14, als auch bei der Lagerung des Mitnehmers 13 ist enorm wichtig, dass die Rotationsachsen genau übereinander liegen.

Wie bei einem konventionellen Messsystem ist auch bei einem erfindungsgemässen Messsystem 10 dem Mitnehmer 13 ein Winkelmesssystem (Winkelgeber) zugeordnet, das Signale bereitstellt, die eine Aussage über die antriebsseitige Winkelposition des Mitnehmers 13 zulässt. Das Winkelmesssystem ist unterhalb des Tisches 13.1 angeordnet und daher in Fig. 1 nicht sichtbar. Gemäss Erfindung wird auch dem mitlaufenden Zentriermittel 14 ein separates Winkelmesssystem zugeordnet, das Signale bereitstellt, die eine Aussage über die abtriebsseitige Winkelposition des Zentriermittels 14 zulässt. Weiterhin sind gemäss Erfindung Softwaremittel vorgesehen, die durch eine Vergleichsberechnung anhand der antriebsseitigen Winkelposition und der abtriebsseitigen Winkelposition einen Schlupf zwischen dem Mitnehmer 13 und dem rotationssymmetrischen Präzisionsteil 11 ermitteln.

Das Messsystem 10 umfasst, wie in Fig. 1 gezeigt, mindestens einen Sensor 15 zum dreidimensionalen Vermessen (3D-Tastsystem) des in dem Messsystem 10 eingespannten Präzisionsteiles 11. Vorzugsweise ist ein Arm 15.1 vorgesehen, der in der Höhe verschoben werden kann, wie durch den Doppelpfeil 15.2 angedeutet. Ausserdem kann der Sensor 15 eine Zustellbewegung ausführen, wie durch die beiden zueinander senkrecht stehenden Doppelpfeile 15.3 angedeutet. Der Sensor 15 ist extrem empfindlich und es ist beim schnellen Vermessen wichtig, dass der Sensor 15 beim Zustellen und/oder beim Messen parallel zu den Doppelpfeilen 15.3 oder beim Drehen des Präzisionsteils 11 um die Achse A1 nicht mit dem Präzisionsteil 11 kollidiert.

Untersuchungen an verschiedenen Messaufbauten und Anordnungen haben ergeben, dass es nur mit enorm grossem Aufwand möglich wäre in einem konventionellen Messsystem mit der bekannten und bewährten Einspannvorrichtung für Präzisionsteile eine quantitative Aussage über den Schlupf zu machen. Selbst wenn die Genauigkeit - sprich die Winkelauflösung des Winkelmesssystems, das gemäss Erfindung dem Zentriermittel 14 zugeordnet ist - genauso gross ist wie die Genauigkeit des Winkelmesssystems auf der Antriebsseite, so wäre man trotzdem nicht in der Lage den aktuellen Schlupf genau zu ermitteln und die Vermessung unter Berücksichtigung des Schlupfes fortzusetzen. Die Messgenauigkeit des Messsystems, die im Wesentlichen durch die Genauigkeit des Sensors 15, die Genauigkeit des antriebseitigen Winkelgebers und die Genauigkeit der drei linearen Achsen bestimmt wird, würde in einem System, das den Schlupf ermittelt und die Messungen unter rechnerischer Berücksichtigung des Schlupfes fortsetzt stark beeinträchtigt. Vor allem jedoch wäre unter Umständen die Reproduzierbarkeit der Messungen nicht mehr gegeben.

Ein weiteres Problem ist die Befestigung des zusätzlichen Winkelmesssystems im Bereich des mitlaufenden Zentriermittels 14. Durch die Höhenverstellbarkeit des Zentriermittels 14 ergeben sich Schwierigkeiten bei der Montage des Winkelmesssystems. Einerseits muss ein solches Winkelmesssystem sekundengenau jede Winkelposition detektieren können, andererseits muss sie es zulassen, dass das Zentriermittel 14 bei dem Einspannen des Präzisionsteiles 11 eine Verschiebung parallel zur Rotationsachse A1 ausführt.

Gemäss Erfindung wurde ein anderer Weg beschritten, um schnelle und trotzdem genaue Messungen zu ermöglichen, wie im Folgenden näher erläutert wird.

In einer ersten vorteilhaften Ausführungsform ist das Winkelmesssystem am mitlaufenden Zentriermittel 14 so angeordnet und die Softwaremittel sind so ausgelegt, dass sie das Auftreten von Schlupf während dem Vermessen schnell erkennen. Sobald Schlupf erkannt wurde, erfolgt eine Meldung an die Steuerung des Messablaufs. Diese Meldung ermöglicht es den Messablauf zu stoppen, um eine fehlerhafte Messung zu verhindern, oder um gar zu vermeiden, dass in einem nächsten Messschritt der Sensor 15 beschädigt wird, falls er zum Beispiel beim Zustellen mit Zustellgeschwindigkeit gegen einen Zahnkopf gefahren wird, der sich durch den Schlupf verursacht an einer Winkelposition befindet wo eigentlich ein Zahnzwischenraum erwartet wird.

Nachdem der Messablauf gestoppt wurde, kann
- das Vermessen des Präzisionsteils 11 neu gestartet werden, und/oder
- es kann eine Intervention eines Bedieners erfolgen, um die Ursache des Schlupfes zu beseitigen, und/oder
- es kann eine spezielle Routine zum Einsatz kommen, welche die wirkliche Winkelposition des Präzisionsteiles 11 ermittelt, um dann den Messvorgang fortsetzen zu können und/oder
- die Messung kann automatisch mit geringerer Winkelbeschleunigung wiederholt werden.

Ein erstes Verfahren gemäss Erfindung zum Vermessen eines rotationssymmetrischen Präzisionsteiles 11 läuft wie folgt ab. Es wird auf Fig. 2 Bezug genommen. Das zu vermessende Präzisionsteile 11 wird so zwischen dem Mitnehmer 13.1, 13.2 und dem mitlaufenden Zentriermittel 14 eingespannt, dass eine kraftschlüssige Übertragung der Rotation des Mitnehmer 13.1, 13.2 auf das Präzisionsteil 11 erfolgt. Das Präzisionsteil 11 wird zu diesem Zweck koaxial zwischen dem Mitnehmer 13.1, 13.2 und dem Zentriermittel 14 gelagert. Wichtig ist, dass das Zentriermittel 14 sehr leichtgängig drehbar gelagert ist und dass es ein vernachlässigbares Trägheitsmoment hat so, dass die Mitnahme des Zentriermittels 14 durch Reibschluss an dieser Stelle gewährleistet ist. In dem gezeigten Beispiel wird ein Zylinderrad 11 mit Aussenverzahnung vermessen. Das Zylinderrad 11 weist eine Welle 11.1 auf, die sich im gezeigten Beispiel nach oben und unten erstreckt. Nun wird das Präzisionsteil 11 durch Antreiben des Mitnehmers 13.1, 13.2 mittels einer Ansteuerung 12 um einen Winkelbetrag rotiert. In diesem Zusammenhang kommt ein antriebsseitiges, sehr genaues Winkelmesssystem zum Einsatz (hierin auch erstes Winkelmesssystem genannt). Das Winkelmesssystem stellt Signale bereit, die eine Aussage über die antriebsseitige Winkelposition zulassen. Damit kann die Ansteuerung so angesteuert werden, dass die gewünschte Winkelposition angefahren werden kann. Nun wird die abtriebsseitige Winkelposition des Zentriermittels 14 mit einem zweiten Winkelmesssystem ermittelt, das Signale bereitstellt, die eine Aussage über die abtriebsseitige Winkelposition, respektive über eine relative Winkelposition in Bezug auf die vom ersten Winkelgeber gemessene Winkelposition, zulassen. Dann werden die antriebsseitige Winkelposition und die abtriebsseitige Winkelposition verglichen oder zueinander in Bezug gesetzt, um Schlupf zwischen dem Mitnehmer 13.1, 13.2 und dem Präzisionsteil 11 festzustellen.

Damit das erfindungsgemässe Verfahren zuverlässig funktioniert, wird vorzugsweise in einem Initialisierungsschritt ein Abgleich durchgeführt, der sicher stellt, dass das erste Winkelmesssystem und das zweite Winkelmesssystem beide auf Null gesetzt werden, oder der die momentanen Winkelmesssystempositionen abgleicht. Die beiden Winkelmesssysteme können auch synchronisiert werden, um eine relative Abweichung beim Vergleich der Winkelpositionen zu ermöglichen.

Ein weiteres vorteilhaftes Verfahren zeichnet sich dadurch aus, dass die genannten Schritte während dem Ausführen von Vermessungsschritten durchgeführt werden, wobei ein beim Ausführen der Vermessungsschritte verwendeter Messkopf 15 nur dann zum Einsatz kommt, wenn kein Schlupf erkannt wurde. Erst wenn der Vergleich der Winkelpositionen weitestgehend eine Übereinstimmung anzeigt, oder wenn die relative Winkelposition nicht voneinander abweicht, wird der Messkopf 15 parallel zum Doppelpfeil 15.2 und/oder zu den Doppelpfeilen 15.3 bewegt.

Ein weiteres vorteilhaftes Verfahren zeichnet sich dadurch aus, dass die genannten Schritte im Rahmen eines Testlaufs vor dem Ausführen von Vermessungsschritten durchgeführt werden, wobei die Ansteuerung 12 das Präzisionsteil 11 mit verschiedenen Winkelbeschleunigungen antreibt, um eine maximal zulässige Winkelbeschleunigung zu ermitteln, ab der Schlupf auftritt. Vorzugsweise werden dann bei dem Ausführen der eigentlichen Vermessungsschritte nur Winkelbeschleunigungen eingestellt, die geringer sind als die maximal zulässige Winkelbeschleunigung.

Eine weitere vorteilhafte Ausführungsform der Erfindung zeichnet sich dadurch aus, dass dem eigentlichen Messverfahren ein Testlauf vorgeschaltet ist. Der Testlauf ist so ausgelegt, dass das Messsystem 10, mittels des zusätzlichen Winkelmesssystems, das dem mitlaufenden Zentriermittel 14 zugeordnet ist und mittels der Softwaremittel in der Lage ist einen zulässigen Beschleunigungsgrenzwert zu ermitteln. Der Testlauf umfasst die folgenden Verfahrensschritte:
(1) Beschleunigen des Präzisionsteils 11 mit einer ersten Winkelbeschleunigung durch Antreiben des Mitnehmers 13 mittels der Ansteuerung 12,
(2) Anhalten des Präzisionsteils 11,
(3) Ermitteln der Winkelposition durch das Winkelmesssystem des Mitnehmers 13,
(4) Ermitteln der Winkelposition durch das Winkelmesssystem des mitlaufenden Zentriermittels 14,
(5) Ermitteln, ob sich eine Winkeldifferenz (durch Vergleichen der absoluten Winkelpositionen oder durch einen relativen Vergleich) zwischen den Winkelpositionen ergeben hat,
(6) Falls sich kein Schlupf ergeben hat, auswählen einer Winkelbeschleunigung, die grösser ist als die erste Winkelbeschleunigung und Wiederholen der Schritte (1) bis (5) mit der höheren Winkelbeschleunigung,
(7) Falls sich Schlupf ergeben hat, Festlegen eines zulässigen Beschleunigungsgrenzwertes und Übergang zum eigentlichen Messverfahren, wobei das Messverfahren so ausgeführt wird, dass der zulässige Beschleunigungsgrenzwert nicht überschritten wird.

Vorzugsweise kann die Vorrichtung gemäss Erfindung mit einem Beschleunigungssensor ausgestattet sein, der eine genaue Aussage über die momentane Winkelbeschleunigung zulässt. Damit kann man besser sicher stellen, dass keine Winkelbeschleunigungen auftreten, die über der maximal zulässigen Winkelbeschleunigung liegen.

Es gibt verschiedene Möglichkeiten diesen Testlauf so auszulegen, dass er möglichst schnell konvergiert, dass heisst das möglichst schnell ein Beschleunigungsgrenzwert ermittelt werden kann.

Es ist ein Vorteil der erfindungsgemässen Ausführungsformen, dass die Genauigkeit - sprich die Winkelauflösung des Winkelmesssystems, das gemäss Erfindung dem Zentriermittel 14 zugeordnet ist - nicht so gross sein muss wie die Genauigkeit des Winkelmesssystems auf der Antriebsseite. Dadurch sind die Kosten für die zusätzlichen Elemente (Winkelmesssystem, Befestigungsmittel und Softwaremittel) nicht so hoch.

In einer bevorzugten Ausführungsform ist das Messsystem so ausgelegt, dass es automatisch bestückt werden kann. Das zu vermessende Präzisionsteil wird vorzugsweise von einem Roboterarm von einer Bearbeitungsstation an das Messsystem übergeben und dort eingespannt. Das Einspannen erfolgt zwischen dem Mitnehmer und dem Zentriermittel. Es wäre technisch relativ aufwendig bei grösseren Präzisionsteilen den Mitnehmer so auszuführen, dass er das Präzisionsteil fest einspannen kann, da zu diesem Zweck typischerweise mittels Schrauben oder dergleichen mehrere Backen eingestellt und fest angezogen werden müssen. Gemäss Erfindung können auch bei grösseren Präzisionsteilen die herkömmlichen Mitnehmer und Zentrierspitzen verwendet werden, da der Schlupf nun automatisch detektierbar ist. Damit sind herkömmliche Messsysteme, wenn sie mit der erfindungsgemässen Schlupferkennung ausgestattet sind, automatisierbar.

Vorzugsweise kommen als antriebsseitiges Winkelmesssystem Bautypen zum Einsatz, die auf der antriebsseitigen Welle montierbar sind. Ein solches Winkelmesssystem stellt Signale bereit, die eine Aussage über die antriebsseitige Winkelposition des Mitnehmers 13 zulassen. Typischerweise werden analoge Signale zur Verfügung gestellt, die in digitale Signale umgewandelt (A-D-Wandlung) werden. Die digitalen Signale werden dann der Ansteuerung 12 zugeführt. Als Ergebnis steht der Winkelwert mit einer Auflösung von n1 Inkrementen pro Umdrehung zur Verfügung und Winkeländerungen werden in Schritten gemessen, wobei die kleinste messbare Änderung sich für dn = 1 ergibt.

In einer bevorzugten Ausführungsform ist das antriebsseitige Winkelmesssystem, d.h. das Winkelmesssystem, das dem Tisch 13.1 zugeordnet ist, so ausgelegt, dass zwischen 10'000 und 40'000 Signalen pro 360 Grad Umdrehung liefert. Vorzugsweise werden diese Signale als analoge Sinussignale geliefert. In einer weiteren bevorzugten Ausführungsform werden diese Sinussignale zum Beispiel 1024-fach elektronisch interpoliert. Bei einer Auflösung von 36'000 Signalen pro 360 Grad Umdrehung ergeben sich dann 36 Millionen Pulse.

Das Winkelmesssystem, das dem mitlaufenden Zentriermittel zugeordnet ist, liefert vorzugsweise zwischen 50 und 5'000 Signale pro 360 Grad Umdrehung. Vorzugsweise werden auch die Signale dieses Winkelmesssystems als analoge Sinussignale geliefert. In einer weiteren bevorzugten Ausführungsform werden diese Sinussignale mit der gleichen Rate, d.h. 1024-fach, elektronisch interpoliert. Bei einer Auflösung von 100 Signalen pro 360 Grad Umdrehung ergeben sich dann zum Beispiel 100'000 Pulse.

Mit einer solchen Auslegung der beiden Winkelmesssysteme, kann Schlupf erkannt werden, der einige Winkelminuten gross ist. Dies ist ausreichend, da Untersuchungen ergeben habe, dass ein kleinerer Schlupf kaum auftritt.

Die Winkelgeschwindigkeit des Mitnehmers 13 errechnet sich aus dem Differential des Winkels nach der Zeit and die Winkelbeschleunigung errechnet sich aus dem Differential der Winkelgeschwindigkeit nach der Zeit.

Vorzugsweise kommen, wie beschrieben, antriebsseitig Winkelmesssysteme zum Einsatz, mit einer Auflösung von mindestens n1 = 10'000 Winkelschritten pro 360 Grad Umdrehung. Besonders bevorzugt sind Auflösungen von n1 = 36'000 Winkelschritten oder mehr pro 360 Grad Umdrehung. Besonders geeignet ist eine Auflösung von n1 = 36'000 Winkelschritten pro 360 Grad Umdrehung.

Besonders als Winkelmesssystem geeignet sind Resolver und Inkrementalgeber. Der konstruktive Aufbau eines Resolvers entspricht dem einer 2-strängigen Drehfeldmaschine. Am weitesten verbreitet sind Ausführungen ohne eigene Lagerung, bei denen der Rotor direkt auf die Motorwelle des Antriebs montiert wird. Ein solcher Resolver kann direkt auf der Welle sitzen, die den Mitnehmer 13 bewegt.

In Anwendungen höchster Präzision werden häufig die nachfolgend beschriebenen Inkrementalgeber verwendet. Eine inkrementelle Übertragung der Winkelinformation vom Winkelmesssystem zu einem Regler der Ansteuerung 12 bietet den Vorteil, dass lediglich zwei Signale benötigt werden, um die Information über die Bewegungsrichtung, die Geschwindigkeit und die relative Winkelposition zu übertragen. Es gibt eine Vielzahl von Realisierungsmöglichkeiten für Inkrementalgeber. Im Zusammenhang mit der Erfindung werden bevorzugt Magnetfeldgeber und photoelektrische Winkelgeber verwendet.

Die Magnetfeldgeber umfassen eine Maßverkörperung und einen Sensorkopf. Zumindest zwei Sensoren sind im Sensorkopf in einem Abstand montiert, um einen Phasenversatz von 90° zwischen zwei Spursignalen zu realisieren. Eine Modulation des Magnetfeldes erfolgt durch die Relativbewegung zwischen Maßverkörperung und Sensor. Die Maßverkörperung kann dabei magnetisch aktiv oder magnetisch passiv ausgeführt sein.

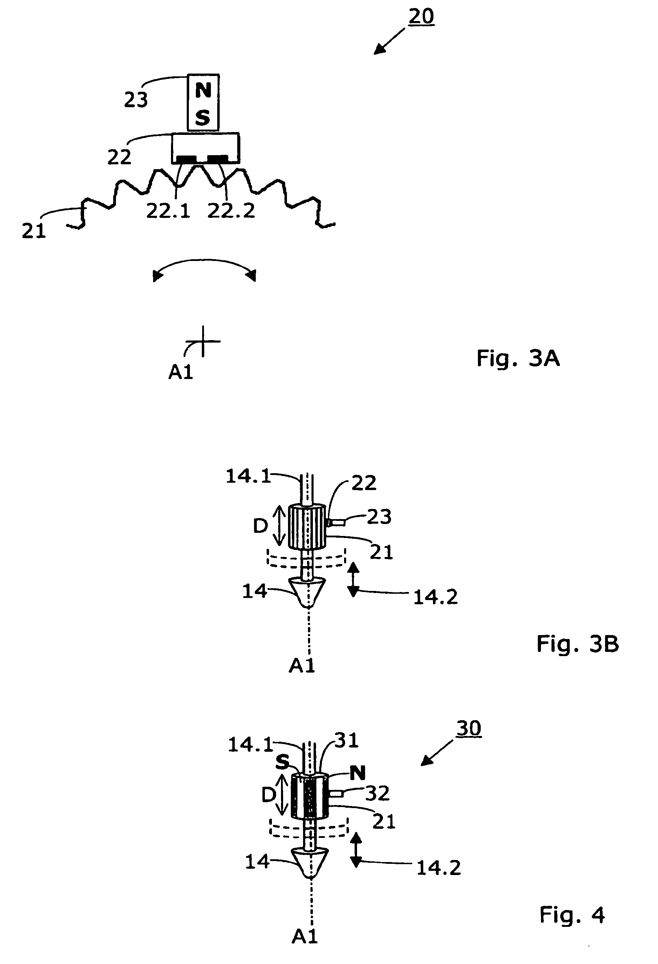

Fig. 3A und 3B zeigen die erfindungsgemässe Anwendung eines Magnetfeldgebers 20 als Winkelmesssystem auf der mitlaufenden Seite der Vorrichtung 10. Es handelt sich bei dem Geber 20 um einen Geber mit magnetisch passiver Maßverkörperung. Die eigentlichen Sensoren 22.1, 22.2 sind zwischen einem Permanentmagneten 23 und einem Zahnrad 21 aus hochpermeablen Werkstoff angeordnet. Die Reluktanz in dem so aufgebauten magnetischen Kreis ändert sich winkelabhängig. Über den Halleffekt, den magnetoresistiven Effekt oder mittels Wirbelstromsensoren wird die Flussdichte bzw. Feldstärke am Sensorkopf 22 gemessen. Das Zahnrad 21 ist ein zylinderförmiges Zahnrad mit Geradverzahnung. Die Dicke D des Zahnrades ist so gewählt, dass sich trotz achsialer Verschiebung der mitlaufenden Zentrierspitze 14 die Zähne des Zahnrades 21 immer im Bereich des Sensorkopfes 22 befinden.

Genaue Winkelgeber 20 erfordern hohe Periodenzahlen m0 und somit Zahnräder 21 mit relativ grossem Durchmesser. Falls eine Periodenzahl m0 pro 360 Grad Umfang von m0 = 2⁸ erwünscht ist, hat das Zahnrad 21 typischerweise einen Durchmesser von mehr als 50mm. In diese Berechnung geht neben der Periodenzahl auch der Abstand zwischen den beiden Sensoren 22.1 und 22.2 mit ein.

Eine höhere Periodenzahl m0 bei kompakten Abmessungen können mit einer aktiven Maßverkörperungen erreicht werden, wobei beim abtriebseitigen Winkelgeber 20 der Einsatz einer solchen aktiven Massverkörperung gemäss Erfindung nicht unbedingt notwendig ist, da die Winkelauflösung dieses Winkelgebers 20 kleiner sein kann als die Winkelauflösung des ersten Winkelgebers, wie weiter oben beschrieben.

Eine Ausführungsform eines aktiven Winkelgebers 30 kann eine magnetisierte Folie oder einen magnetisierten Ring umfassen, der zylinderförmig ausgebildet und koaxial zu der Achse A1 angeordnet ist. Als Sensorkopf 32 wird dann ein Hall-Sensor eingesetzt. Eine beispielhafte Ausführungsform ist in der Fig. 4 gezeigt. Es ist ein zylindrischer Körper 31 vorgesehen, der koaxial zu der Achse A1 angeordnet ist und auf einer Welle 14.1 sitzt. Der Körper 31 weist eine magnetische Geberpolarisierung mit abwechselnd N- und S polarisierten Segmenten auf, wie in Fig. 4 angedeutet. Der Hallsensor 32 sitzt neben dem Körper 31 und erfasst jede Winkeländerung anhand der vorbeiwandernden N-und S polarisierten Segmente. Um so dünner in Richtung des Umfangs die N-und S polarisierten Segmente sind, um so höher ist die Winkelauflösung der gezeigten Anordnung 30. Das zweite Winkelmesssystem weist vorzugsweise n2 Segmente auf, wobei n2 < n1 gilt.

Es kann auch das photoelektrische Messprinzip eingesetzt werden, wobei ein optischer Sensor vorbeiwandernde Segmente eines zylindrischen Körpers erfasst.

Wie anhand der in den Figuren 3A, 3B und 4 gezeigten Ausführungsbeispiele beschrieben, umfasst das zweite Winkelmesssystem, das dem mitlaufenden Zentriermittel zugeordnet ist, gemäss Erfindung einen zylindrischen Körper, der koaxial zur Rotationsachse A1 angeordnet und der zusammen mit dem Zentriermittel parallel zu dieser Achse A1 verschiebbar gelagert ist. Der zylindrische Körper weist eine Segmentierung der Mantelfläche auf, die den Mantel des Zylinders in streifenförmige Segmente unterteilt, deren Längsrichtung parallel zur Achse des zylindrischen Körpers verläuft. Dadurch wird der zylindrische Körper in eine Anzahl von n2 Segmenten (Maßverkörperung) unterteilt, die sich beim Drehen des zylindrischen Körpers um die Rotationsachse A1 an einem Sensorkopf vorbeibewegen. Der Sensorkopf kann die sich durch das Vorbeibewegen der Segmente ergebenden Änderungen erkennen und verarbeiten, um daraus eine Aussage über die relative und/oder absolute Winkeländerung zu ermöglichen.

Der Sensorkopf ist gemäss der bisher beschriebenen Ausführungsformen der Erfindung stationär angeordnet. Die Verschiebbarkeit wird dadurch ermöglicht, dass sich der zylinderförmige Körper parallel zur Achse A1 verschieben kann, ohne die Funktion des Winkelmesssystems zu beeinträchtigen.

In einer weiteren Ausführungsform sind sowohl die Maßverkörperung als auch der Sensor verschiebbar angeordnet, wobei sich die Position der Massverkörperung und des Sensors zueinander nicht verändert. Vorzugsweise wird das erreicht, indem der Sensor eine vertikale Führung aufweist, die ein vertikales Verschieben (parallel zur Achse A1) zulässt, ein Verdrehen um die Achse A1 jedoch unterbindet. In einer bevorzugten Ausführungsform ist zwischen Sensor und Gehäuse (respektive einer Aufhängung des Gehäuses) eine Stift-Nut Verbindung vorgesehen. So kann zum Beispiel der Sensor auf einer von der Massverkörperung abgewandten Seite eine vertikal verlaufende Nut aufweisen, um ein vertikales Gleiten des Sensors in Bezug auf einen stationär am Gehäuse befestigten Stift zu gewährleisten.

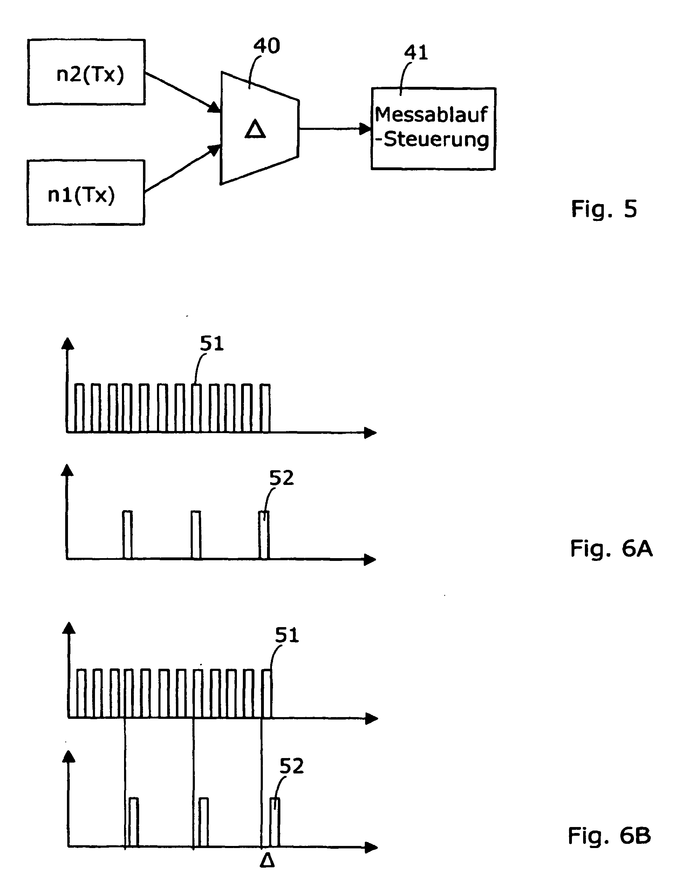

Ein schematisches Blockdiagram einer weitern Ausführungsform ist in Fig. 5 gezeigt. Es handelt sich um eine Ausführungsform, bei der die Winkelpositionen auf der Antriebsseite und der Abtriebsseite als absolute Grössen ermittelt werden. Die Winkelposition auf der Antriebsseite n1 im Zeitpunkt Tx wird mit n1(Tx) bezeichnet und die Winkelposition auf der Abtriebsseite n2 im Zeitpunkt Tx wird mit n2(Tx) bezeichnet. Es wird durch die Softwaremittel 40 ein Vergleich durchgeführt, der im gezeigten Beispiel eine einfache Subtraktion sein kann. Falls eine Differenz zwischen den beiden Winkelpositionen besteht, d.h. falls n1(Tx)≠n2(Tx), dann wird der Messablauf-Steuerung 41 ein Signal übermittelt. Die Messablauf-Steuerung 41 unterbricht dann den Messablauf, wie weiter oben beschrieben.

Eine Ausführungsform mit relativem Vergleich der Winkelpositionen wird in den Figuren 6A und 6B anhand zweier Beispiel in Diagrammform dargestellt. Auf der horizontalen Achse wird die Zeit dargestellt und die vertikale Achse gibt die Signalstärke (Amplitude) an. Im oberen Graph des Diagramms 6A ist der Takt gezeigt, der sich beim Abtasten der antriebsseitigen Rotation ergibt. Der Takt ist nach einer Analog-Digital-Wandlung in Form einfacher Rechteckimpulse 51 gezeigt. Zwölf Impulse 51 entsprechen einer ersten Winkelposition. Synchron dazu werden die Impulse 52 des abtriebsseitigen Winkelgeber aufgezeichnet, wie im unteren Graph des Diagramms 6A gezeigt. Der zweite Winkelgeber hat eine geringere Winkelauflösung. Er liefert nur ein Viertel der Impulse, die der erste Winkelgeber liefert (n1 = 4 x n2). Falls die Impulse 52 synchron zu den Impulsen 51 liegen, kann davon ausgegangen werden, dass kein Schlupf vorliegt. In Fig. 6A ist kein Schlupf vorhanden.

In Fig. 6B dagegen ergibt sich eine Winkelabweichung zwischen Antriebs- und Abtriebsseite, wie durch eine leichte Verschiebung Δ der Impulse 52 gegenüber den Impulsen 51 gezeigt. Aus dieser Verschiebung lässt sich erkennen, dass Schlupf aufgetreten ist.

Es ist ein Vorteil der Erfindung, dass einfache Mitnehmer 13 eingesetzt werden können, die mittels Kraftschluss eine Kraftübertragung auf das Präzisionsteil 11 ausüben. In diesem Fall erfolgt die Kraftübertragung mittels gegenseitiger Reibung. Derartige Mitnehmer 13 sind relativ einfach in der Handhabung. Ausserdem können sie automatisch beschickt werden, was eine Vollautomatisierung des Messsystems ermöglicht.

Mit einem erfindungsgemässen CNC-Messgerät können neben aussenverzahnten Stirnrädern auch Innenverzahnungen, Kegelräder, Schnecken, Verzahnungswerkzeuge und dergleichen gemessen werden, wobei das Messgerät eine vertikale Drehachse hat und die rotationssymmetrischen Werkstücke koaxial aufnimmt.

## Patentansprüche

1. Vorrichtung zum Vermessen eines rotationssymmetrischen Präzisionsteiles (11), mit einem über eine Ansteuerung (12) antreibbaren Mitnehmer (13; 13.1, 13.2) und einem mitlaufenden Zentriermittel (14), wobei der Mitnehmer (13; 13.1, 13.2) und das mitlaufende Zentriermittel (14) so angeordnet sind, dass ein zu vermessendes rotationssymmetrisches Präzisionsteil (11) kraftschlüssig koaxial zwischen Mitnehmer (13; 13.1, 13.2) und Zentriermittel (14) einspannbar ist, und wobei dem Mitnehmer (13; 13.1, 13.2) ein erstes Winkelmesssystem zugeordnet ist, das Signale bereitstellt, die eine Aussage über die antriebsseitige Winkelposition des Mitnehmers (13; 13.1, 13.2) zulässt, **dadurch gekennzeichnet, dass**
- dem mitlaufenden Zentriermittel (14) ein weiteres Winkelmesssystem (20; 30) zugeordnet ist, das Signale bereitstellt, die eine Aussage über die abtriebsseitige Winkelposition des Zentriermittels (14) zulässt, und
- dass Softwaremittel vorgesehen sind, die durch eine Vergleichsberechnung anhand der antriebsseitigen Winkelposition und der abtriebsseitigen Winkelposition einen Schlupf zwischen dem Mitnehmer (13; 13.1, 13.2) und dem rotationssymmetrischen Präzisionsteil (11) ermitteln.

2. Vorrichtung nach Anspruch 1, **dadurch gekennzeichnet, dass** der Mitnehmer (13.2) fest mit einem Tisch (13.1) verbindbar ist, der durch die Ansteuerung (12) um eine erste Rotationsachse (A1) drehbar ist, wobei der Mitnehmer (13.2) eine Rotationsachse aufweist, die koaxial zur ersten Rotationsachse (A1) verläuft.

3. Vorrichtung nach Anspruch 2, **dadurch gekennzeichnet, dass** der Mitnehmer (13.2) als Zentrierspitze ausgeführt ist.

4. Vorrichtung nach Anspruch 2, **dadurch gekennzeichnet, dass** der Mitnehmer (13.2) Spannmittel umfasst, die so ausgeführt sind, dass das zu vermessende rotationssymmetrische Präzisionsteil (11) kraftschlüssig koaxial zu der ersten Rotationsachse (A1) einspannbar ist.

5. Vorrichtung nach Anspruch 1, **dadurch gekennzeichnet, dass** die mitlaufenden Zentriermittel (14) als Zentrierspitze ausgeführt sind, die durch Kraftschluss zu dem zu vermessenden rotationssymmetrischen Präzisionsteil (11) in Rotation um die erste Rotationsachse (A1) versetzt werden.

6. Vorrichtung nach Anspruch 1 oder 5, **dadurch gekennzeichnet, dass** die mitlaufenden Zentriermittel (14) parallel zu der ersten Rotationsachse (A1) verschiebbar sind, um das manuelle oder automatische Einspannen des Präzisionsteils (11) zu ermöglichen.

7. Vorrichtung nach Anspruch 1, **dadurch gekennzeichnet, dass** das weitere Winkelmesssystem (20; 30) einen zylinderförmigen Körper (21; 31) umfasst, der so zusammen mit dem mitlaufenden Zentriermittel (14) verbunden und gelagert ist, dass er parallel zu der Rotationsachse (A1) verschiebbar ist, ohne die Funktion dieses weiteren (20; 30) Winkelmesssystems zu beeinträchtigen.

8. Vorrichtung nach Anspruch 6, **dadurch gekennzeichnet, dass** das weitere Winkelmesssystem (20; 30) so mechanisch mit dem mitlaufenden Zentriermittel (14) gekoppelt ist, dass es die Verschiebbarkeit parallel zu der ersten Rotationsachse (A1) zulässt.

9. Vorrichtung nach einem der vorhergehenden Ansprüche, **dadurch gekennzeichnet, dass** das weitere Winkelmesssystem (20; 30) eine geringere Winkelauflösung (n2) hat als das erste Winkelmesssystem, wobei die Softwaremittel den Schlupf erkennen aber nicht quantifizieren können.

10. CNC-Messgerät (10) zum Vermessen eines Zahnrades (11), **dadurch gekennzeichnet, dass** es eine Vorrichtung nach einem der vorhergehenden Ansprüche umfasst, wobei der Mitnehmer (13; 13.1, 13.2) und die Zentriermittel (14) zum Einspannen des Zahnrades (11) ausgelegt sind und eine CNC-Steuerung vorhanden ist, die es ermöglicht das Zahnrad (11) in verschiedene Winkelpositionen zu drehen und mittels eines Messkopf (15) das Zahnrad abzutasten.

11. CNC-Messgerät (10) nach Anspruch 10, **dadurch gekennzeichnet, dass** die Ansteuerung (12) das Zahnrad (11) abwechselnd um einen Rotationswinkel dreht und anhält, wobei im angehaltenen Zustand mittels des Messkopfes (15) die Vermessung am Zahnrad (11) vorgenommen werden kann.

12. CNC-Messgerät (10) nach Anspruch 10, **dadurch gekennzeichnet, dass** beim Drehen eine Winkelbeschleunigung des Zahnrades (11) so einstellbar ist, dass kein Schlupf zwischen dem Mitnehmer (13; 13.1, 13.2) und dem Zahnrad (11) auftritt.

13. CNC-Messgerät (10) nach Anspruch 10, **dadurch gekennzeichnet, dass** beim Auftreten von Schlupf kein Vermessen erfolgt, sondern eine laufende Vermessung entweder unterbrochen oder abgebrochen wird.

14. CNC-Messgerät (10) nach Anspruch 10, **dadurch gekennzeichnet, dass** vor dem Vermessen ein Testlauf aufgerufen werden kann, der das Zahnrad (11) mit verschiedenen Winkelbeschleunigungen antreibt, um eine maximal zulässige Winkelbeschleunigung zu ermitteln, ab der Schlupf auftritt, wobei vorzugsweise beim anschliessenden Vermessen Winkelbeschleunigungen eingestellt werden, die geringer sind als die maximal zulässige Winkelbeschleunigung.

15. Verfahren zum Vermessen eines rotationssymmetrischen Präzisionsteiles (11) mittels eines CNC-Messgeräts (10) mit einem über eine Ansteuerung (12) antreibbaren Mitnehmer (13; 13.1, 13.2) und einem mitlaufenden Zentriermittel (14), **dadurch gekennzeichnet, dass** das Verfahren die folgenden Schritte umfasst:
- Kraftschlüssiges einspannen des Präzisionsteiles (11) zwischen dem Mitnehmer (13; 13.1, 13.2) und dem mitlaufenden Zentriermittel (14) so, dass das Präzisionsteil (11) koaxial zwischen Mitnehmer (13; 13.1, 13.2) und Zentriermittel (14) gelagert ist,
- Rotieren des Präzisionsteiles (11) durch Antreiben des Mitnehmers (13; 13.1, 13.2) mittels der Ansteuerung (12), wobei unter Verwendung eines ersten Winkelmesssystems, das Signale bereitstellt, eine Aussage über die antriebsseitige Winkelposition ermöglicht wird,
- Ermitteln einer abtriebsseitigen Winkelposition des Zentriermittels (14) mit einem zweiten Winkelmesssystem (20; 30), das Signale bereitstellt, die eine Aussage über die abtriebsseitige Winkelposition zulassen,
- Vergleichen der antriebsseitigen Winkelposition und der abtriebsseitigen Winkelposition um Schlupf zwischen dem Mitnehmer (13; 13.1, 13.2) und dem Präzisionsteil (11) zu ermitteln.

16. Das Verfahren nach Anspruch 15, **dadurch gekennzeichnet, dass** die genannten Schritte während dem Ausführen von Vermessungsschritten durchgeführt werden, wobei ein beim Ausführen der Vermessungsschritte verwendeter Messkopf (15) nur zum Einsatz kommt, wenn kein Schlupf erkannt wurde.

17. Das Verfahren nach Anspruch 15, **dadurch gekennzeichnet, dass** die genannten Schritte vor dem Ausführen von Vermessungsschritten durchgeführt werden, wobei die Ansteuerung das Präzisionsteil (11) mit verschiedenen Winkelbeschleunigungen antreibt, um eine maximal zulässige Winkelbeschleunigung zu ermitteln, ab der Schlupf auftritt, und wobei vorzugsweise bei dem Ausführen der Vermessungsschritte Winkelbeschleunigungen eingestellt werden, die geringer sind als die maximal zulässige Winkelbeschleunigung.

18. Das Verfahren nach Anspruch 15, **dadurch gekennzeichnet, dass** vor dem Rotieren des Präzisionsteiles (11) ein Initialisierungsschritt ausgeführt wird, um einen Abgleich zwischen dem ersten Winkelmesssystem und dem zweiten Winkelmesssystem zu ermöglichen.

## Claims

1. A device for measuring a rotationally symmetric precision part (11), having a dog (13; 13.1, 13.2) drivable via an actuator (12) and a revolving centering means (14), the dog (13; 13.1, 13.2) and the revolving centering means (14) being situated in such a way that a rotationally symmetric precision part (11) to be measured may be chucked non-positively between dog (13; 13.1, 13.2) and centering means (14), and a first angle measuring system being assigned to the dog (13; 13.1, 13.2), which provides signals, which permit a statement about the drive-side angular position of the dog (13; 13.1, 13.2), **characterized in that**
- a further angle measuring system (20; 30) is assigned to the revolving centering means (14), which provides signals, which permit a statement about the output-side angular position of the centering means (14), and
- software means are provided, which ascertain a slip between the dog (13; 13.1, 13.2) and the rotationally symmetric precision part (11) by a comparative calculation on the basis of the drive-side angular position and the output-side angular position.

2. The device according to claim 1, **characterized in that** the dog (13.2) is fixedly connectable to a table (13.1), which is rotatable by the actuator (12) around a first rotational axis (A1), the dog (13.2) having a rotational axis which runs coaxially to the first rotational axis (A1).

3. The device according to claim 2, **characterized in that** the dog (13.2) is implemented as a centering tip.

4. The device according to claim 2, **characterized in that** the dog (13.2) comprises chucking means, which are implemented in such a way that the rotationally symmetric precision part (11) to be measured may be chucked non-positively coaxially to the first rotational axis (A1).

5. The device according to claim 1, **characterized in that** the revolving centering means (14) are implemented as a centering tip, which are set into rotation around the first rotational axis (A1) by adhesion to the rotationally symmetric precision part (11) to be measured.

6. The device according to claim 1 or 5, **characterized in that** the revolving centering means (14) are displaceable parallel to the first rotational axis (A1) to allow the manual or automatic chucking of the precision part (11).

7. The device according to claim 1, **characterized in that** the further angle measuring system (20; 30) comprises a cylindrical body (21; 31), which is connected to the revolving centering means (14) and mounted in such a way that it is displaceable parallel to the rotational axis (A1) without impairing the function of this further angle measuring system (20; 30).

8. The device according to claim 6, **characterized in that** the further angle measuring system (20; 30) is mechanically coupled to the revolving centering means (14) in such a way that it permits the displaceability parallel to the first rotational axis (A1).

9. The device according to one of the preceding claims, **characterized in that** the further angle measuring system (20; 30) has a lower angle resolution (n2) than the first angle measuring system, the software means being able to recognize the slip, but not quantify it.

10. A CNC measuring device (10) for measuring a gearwheel (11), **characterized in that** it comprises a device according to one of the preceding claims, the dog (13; 13.1, 13.2) and the centering means (14) being designed for chucking the gearwheel (11) and a CNC controller being provided, which allows the gearwheel (11) to be rotated into various angular positions and scanned using a measuring head (15).

11. The CNC measuring device (10) according to claim 10, **characterized in that** the actuator (12) alternately rotates the gearwheel (11) around a rotation angle and stops it, the measurement on the gearwheel (11) being able to be performed in the stopped state using the measuring head (15).

12. The CNC measuring device (10) according to claim 10, **characterized in that** an angular acceleration of the gearwheel (11) is settable during rotation in such a way that no slip occurs between the dog (13; 13.1, 13.2) and the gearwheel (11).

13. The CNC measuring device (10) according to claim 10, **characterized in that** no measurement is performed if slip occurs, but rather a running measurement is either interrupted or terminated.

14. The CNC measuring device (10) according to claim 10, **characterized in that** a test run may be called before the measurement, which drives the gearwheel (11) at various angular accelerations, to ascertain a maximum permissible angular acceleration, from which slip occurs, angular accelerations preferably being set during the subsequent measurement which are less than the maximum permissible angular acceleration.

15. A method for measuring a rotationally symmetric precision part (11) using a CNC measuring device (10) having a dog (13; 13.1, 13.2) drivable via an actuator (12) and a revolving centering means (14), **characterized in that** the method comprises the following steps:
- non-positively chucking the precision part (11) between the dog (13; 13.1, 13.2) and the revolving centering means (14), so that the precision part (11) is coaxially mounted between dog (13; 13.1, 13.2) and centering means (14),
- rotating the precision part (11) by driving the dog (13; 13.1, 13.2) using the actuator (12), a statement about the drive-side angular position being made possible by using a first angle measuring system, which provides signals,
- ascertaining an output-side angular position of the centering means (14) using a second angle measuring system (20; 30), which provides signals which permit a statement about the output-side angular position,
- comparing the drive-side angular position and the output-side angular position to ascertain slip between the dog (13; 13.1, 13.2) and the precision part (11).

16. The method according to claim 15, **characterized in that** the cited steps are performed during the execution of measurement steps, a measuring head (15) used during execution of the measurement steps only being employed if no slip has been recognized.

17. The method according to claim 15, **characterized in that** the cited steps are performed before the execution of measuring steps, the actuator driving the precision part (11) at various angular accelerations to ascertain a maximum permissible angular acceleration, from which slip occurs, and angular accelerations which are lower than the maximum permissible angular acceleration preferably being set during the execution of the measuring steps.

18. The method according to claim 15, **characterized in that** an initialization step is executed before the rotation of the precision part (11) to allow a calibration between the first angle measuring system and the second angle measuring system.

## Revendications

1. Dispositif de mesure d'une pièce de précision à symétrie de rotation (11), comprenant un entraîneur (13 ; 13.1, 13.2) pouvant être entraîné via un dispositif de commande (12) et un élément de centrage (14) tournant, dans lequel l'entraîneur (13 ; 13.1, 13.2) et l'élément de centrage (14) tournant sont disposés de façon telle qu'une pièce de précision (11) à symétrie de rotation à mesurer peut être serrée de façon coaxiale par adhérence entre l'entraîneur (13 ; 13.1, 13.2) et l'élément de centrage (14), et dans lequel est coordonné à l'entraîneur (13 ; 13.1, 13.2) un premier système de mesure angulaire qui met à disposition des signaux qui permettent une affirmation sur la position angulaire côté entraînement de l'entraîneur (13 ; 13.1, 13.2), **caractérisé en ce que**
- au système de centrage (14) tournant est coordonné un autre système de mesure angulaire (20 ; 30) qui met à disposition des signaux qui permettent une affirmation sur la position angulaire côté sortie de l'élément de centrage (14), et
- des moyens logiciels sont prévus, lesquels déterminent, par un calcul de comparaison au moyen de la position angulaire côté entrée et de la position angulaire côté sortie un glissement entre l'entraîneur (13 ; 13.1, 13.2) et la pièce de précision à symétrie de rotation (11).

2. Dispositif selon la revendication 1, **caractérisé en ce que** l'entraîneur (13.2) peut être relié de façon fixe à une table (13.1) qui peut pivoter via le dispositif de commande (12) autour d'un premier axe de rotation (A1), l'entraîneur (13.2) présentant un axe de rotation qui s'étend de façon coaxiale au premier axe de rotation (A1).

3. Dispositif selon la revendication 2, **caractérisé en ce que** l'entraîneur (13.2) est exécuté en tant que pointe de centrage.

4. Dispositif selon la revendication 2, **caractérisé en ce que** l'entraîneur (13.2) comprend des éléments de serrage qui sont exécutés de façon telle que la pièce de précision à symétrie de rotation à mesurer (11) peut être serrée par adhérence de façon coaxiale par rapport au premier axe de rotation (A1).

5. Dispositif selon la revendication 1, **caractérisé en ce que** les éléments de centrage (14) tournants sont exécutés en tant que pointes de centrage, qui sont déplacées en rotation autour du premier axe de rotation (A1) par adhérence par rapport à la pièce de précision à symétrie de rotation (11) à mesurer.

6. Dispositif selon la revendication 1 ou 5, **caractérisé en ce que** les éléments de centrage (14) tournants peuvent être déplacés parallèlement au premier axe de rotation (A1) pour permettre le serrage manuel ou automatique de la pièce de précision (11).

7. Dispositif selon la revendication 1, **caractérisé en ce que** l'autre système de mesure angulaire (20 ; 30) comprend un corps de forme cylindrique (21 ; 31) qui est relié avec l'élément de centrage (14) tournant et logé de façon à pouvoir être déplacé parallèlement à l'axe de rotation (A1) sans entraver le fonctionnement de cet autre système de mesure angulaire (20 ; 30).

8. Dispositif selon la revendication 6, **caractérisé en ce que** l'autre système de mesure angulaire (20 ; 30) est couplé de façon mécanique à l'élément de centrage (14) tournant de façon telle qu'il permet la mobilité parallèlement au premier axe de rotation (A1).

9. Dispositif selon l'une des revendications précédentes, **caractérisé en ce que** l'autre système de mesure angulaire (20 ; 30) a une résolution angulaire (n2) inférieure au premier système de mesure angulaire, les moyens logiciels pouvant identifier mais non quantifier le glissement.

10. Appareil de mesure à commande numérique (CNC) (10) destiné à mesurer une roue dentée (11), **caractérisé en ce qu'**il comprend un dispositif selon l'une des revendications précédentes, dans lequel l'entraîneur (13 ; 13.1, 13.2) et les éléments de centrage (14) sont exécutés pour serrer la roue dentée (11) et dans lequel il existe un dispositif à commande numérique qui permet de tourner la roue dentée (11) dans différentes positions angulaires et de balayer la roue dentée au moyen d'une tête de mesure (15).

11. Appareil de mesure à commande numérique (10) selon la revendication 10, **caractérisé en ce que** le dispositif de commande (12) fait tourner et retient la roue dentée (11) en alternance autour d'un axe de rotation, suite à quoi, à l'état retenu, on peut entreprendre le mesurage sur la roue dentée (11) au moyen de la tête de mesure (15).

12. Appareil de mesure à commande numérique (10) selon la revendication 10, **caractérisé en ce que** lors de la rotation, on peut régler une accélération angulaire de la roue dentée (11) de façon à ce qu'il ne survienne aucun glissement entre l'entraîneur (13 ; 13.1, 13.2) et la roue dentée (11).

13. Appareil de mesure à commande numérique (10) selon la revendication 10, **caractérisé en ce qu'**en cas de survenue d'un glissement, il ne se produit aucun mesurage, mais qu'un mesurage en cours est interrompu ou supprimé.

14. Appareil de mesure à commande numérique (10) selon la revendication 10, **caractérisé en ce qu'**avant le mesurage, on peut invoquer la réalisation d'un test qui entraîne la roue dentée (11) avec différentes accélérations angulaires pour déterminer une accélération angulaire maximum autorisée à partir de laquelle se produit le glissement, suite à quoi de préférence, lors du mesurage suivant, on règle des accélérations angulaires qui sont plus petites que l'accélération angulaire maximum autorisée.

15. Procédé de mesure d'une pièce de précision à symétrie de rotation (11) au moyen d'un appareil de mesure à commande numérique (10) comportant un entraîneur (13 ; 13.1, 13.2) qui peut être entraîné par un dispositif de commande (12) et un élément de centrage (14) tournant, **caractérisé en ce que** le procédé comprend les étapes suivantes :
- serrage par adhérence de la pièce de précision (11) entre l'entraîneur (13 ; 13.1, 13.2) et l'élément de centrage (14) tournant de façon telle que la pièce de précision (11) est logée de façon coaxiale entre l'entraîneur (13 ; 13.1, 13.2) et l'élément de centrage (14),
- rotation de la pièce de précision (11) par entraînement de l'entraîneur (13 ; 13.1, 13.2) au moyen du dispositif de commande (12), suite à quoi, en utilisant un premier système de mesure angulaire qui met à disposition des signaux, on permet une affirmation sur la position angulaire côté entrée,
- détermination d'une position angulaire côté sortie de l'élément de centrage (14) avec un second système de mesure angulaire (20 ; 30) qui met à disposition des signaux qui permettent une affirmation sur la position angulaire côté sortie,
- comparaison de la position angulaire côté entrée et de la position angulaire côté sortie pour déterminer le glissement entre l'entraîneur (13 ; 13.1, 13.2) et la pièce de précision (11).

16. Procédé selon la revendication 15, **caractérisé en ce que** les étapes nommées sont réalisées pendant l'exécution des étapes de mesurage, suite à quoi une tête de mesure (15) utilisée lors de l'exécution des étapes de mesure est utilisée uniquement lorsque aucun glissement n'a été identifié.

17. Procédé selon la revendication 15, **caractérisé en ce que** les étapes nommées sont réalisées avant l'exécution des étapes de mesurage, suite à quoi le dispositif de commande entraîne la pièce de précision (11) selon différentes accélérations angulaires pour déterminer une accélération angulaire maximum autorisée à partir de laquelle survient le glissement, et suite à quoi de préférence lors de l'exécution des étapes de mesurage, on règle des accélérations angulaires qui sont inférieures à l'accélération angulaire maximum autorisée.

18. Procédé selon la revendication 15, **caractérisé en ce qu'**avant la rotation de la pièce de précision (11), on exécute une étape d'initialisation pour permettre un équilibrage entre le premier système de mesure angulaire et le second système de mesure angulaire.
